# EUROPEAN PATENT APPLICATION

(11) **EP 0 863 683 A2**
(43) Date of publication of application: **09.09.1998**
(21) Application number: 98400485.3
(22) Date of filing: 02.03.1998
(51) Int. Cl.: H04Q 7/24, H04Q 3/00

(54) **System and method for routing incoming calls for a mobile communication system**

(30) Priority: 04.03.1997 ES 9700478
(71) Applicant: ALCATEL ALSTHOM COMPAGNIE GENERALE D'ELECTRICITE, 75008 Paris (FR)
(72) Inventor: Boveda De Miguel, Angel, Madrid 28034 (ES)
(74) Representative: Feray, Valérie

(57) **Abstract**

The system and method for routing incoming calls for a CTM mobile communication system comprise wireless terminals connected to a radio base station (RBS1); a base station controller (RE) is connected through a primary access of an integrated service digital network to a local exchange (LE) of a switched public telephone network (RTPC), and moreover connected to a service control point (SCP) including the databases with the mobile phone subscribers and the service control logic.

The base station controller (RE) sends the mobility management signaling to the control point (SCP) by means of an X.25 interface and an X.25 interface protocol. It also comprises switching means (MS) that work as a service switch point, carrying out the function of a gateway.

## Description

### OBJET OF THE INVENTION

The present invention refers to a system and method for routing incoming calls for a mobile communication system having access to a fixed switched public telephone network, capable of being basic or intelligent.

The system and method for routing incoming calls in a mobile communication system is of special but not exclusive application, in a mobility system of the wireless CTM terminal that has access to a fixed switched public telephone network.

### STATE OF THE ART

In recent years, in some countries, the switched public telephone networks have been equipped with the means necessary to transform them into intelligent networks.

A telephone network is understood as intelligent when it has the capacity to access databases, process them and take decisions according to them.

Currently, there are communication systems that permit mobility to their subscribers, for example the mobility system of the wireless CTM terminal. The mobile communication system requires the infrastructure of the mobile system, as well as the infrastructure of an intelligent network.

A CTM network system comprises a plurality of wireless terminals connected via radio to at least one radio base station. One or several of these base stations are connected to a base station controller, which is connected to a telephone network exchange, generally a local exchange.

The intelligent network has different functional blocks, comprising at least one service control point and at least one service switching point. Whilst the service control point is independent, the service switching point may be integrated in the local exchange or be independent.

The local exchange incorporates a mobility management logic and service switching point functions. The data related to the mobile subscribers is contained in two databases; one of the databases contains information related to the mobile phone subscribers located in the coverage area of the base station controller.

As the subscribers have mobility, they move from one coverage area to another; there is another database containing the information related to the mobile subscribers visiting the coverage area of another base station controller.

The databases are controlled by the service control point that updates the databases with the information provided by the base station controllers by means of the local exchanges of the telephone network. As a result, the local exchange performs logic functions related to the mobility control signaling and is communicated with the service control point by means of an intelligent network communication protocol known as application part of an improved intelligent network INAP+.

The communication between the local exchange and the base station controller is carried out by means of the improved signaling protocol DSS1+, the messages being inserted in a signaling channel of a primary access of an integrated service digital network RDSI.

Currently, standardization of the interaction between functional blocks of the intelligent network is underway. However, the standardizing activity in intelligent networks began rather late and many manufacturers started to define their own interfaces, especially the interface between the service switching point and the service control point; as a result, the interrelation of equipment from different manufacturers is still problematic, if not impossible.

Consequently, the lack of a complete standardization of the interrelations between functional blocks of an intelligent network is an obstacle for the expansion of the mobile communication systems.

Another obstacle arises when the fixed telephone network, especially the local exchanges, have to be transformed, to execute the logical functions of mobility control, incorporating the service switching point to said exchanges. All this may represent a high cost thus making the operator to desist from incorporating a mobile communication system.

### CHARACTERIZATION OF THE INVENTION

The main object of the present invention is to implement a mobile communications network in a way that the existing switched public telephone network, especially its exchanges, are not modified.

Another object of the invention is to implement the minimum functional blocks of an intelligent network that are necessary for the operation of the mobile communication system.

Also, to establish a communication between the functional blocks of the intelligent network and the mobile communication system, so that the telephone network exchanges do not have to transform the messages of the mobility control signaling from one protocol to another. Accordingly, the present invention promotes the expansion of mobile communication networks in the most simple and economical way.

The system and method of routing incoming calls to a mobility system of the wireless CTM terminal of the invention comprise a plurality of wireless terminals, at least one radio base station, at least one base station controller connected by means of a primary or basic access of an integrated service digital network RDSI to an exchange of a switched public telephone network and a service control point of an intelligent network including the databases with the data related to the mobile subscribers.

The base station controller sends the mobility control signaling to the service control point through a direct logic signaling channel and a mobility control protocol, without the intervention of the local exchanges or any other type of exchanges of the telephone network.

Furthermore, it includes switching means which execute some functions of a service switching point and especially the function of a gateway. Consequently, when the incoming call is received in the base station controller, the switching means requests instructions from the service control point, which returns them with orders to route and complete the call.

Therefore, the base station controller supports the mobility control of the incoming call and the fixed telephone network supports the switching functions, not requiring that the exchanges thereof execute neither mobility control functions nor protocol transformations.

Furthermore, it is not necessary neither to incorporate the service switching point to the telephone network exchanges, nor independently connect said functional block to the telephone network. Accordingly, the telephone network has no communication with the service control point.

### BRIEF DESCRIPTION OF THE FIGURES

A more detailed explanation of the invention is given in the following specification based on the attached figures, in which:
- Figure 1 shows a simplified diagram of a mobility system of the wireless CTM terminal according to the state of the art.
- Figure 2 shows a simplified diagram of a mobility system of the wireless CTM terminal according to the invention, and
- Figure 3 shows another simplified diagram of the mobility system of the wireless CTM terminal according to the invention.

### DESCRIPTION OF THE INVENTION

In principle, the present invention can be applied to some mobile communication systems, such as the global system for mobile communications GSM, the improved wireless digital telecommunications system DECT, the mobility system of the CTM wireless terminal, etc.

Therefore, the mobility system of the wireless CTM terminal will be used here as an example to describe a preferred embodiment of the invention, without restricting the use thereof to said mobile communication system.

The CTM network system gives mobility to its subscribers within relatively restricted areas, for example subscribers confined to one or several places, or subscribers spending most of their lives in/or moving between their home and job, all of it within populated areas.

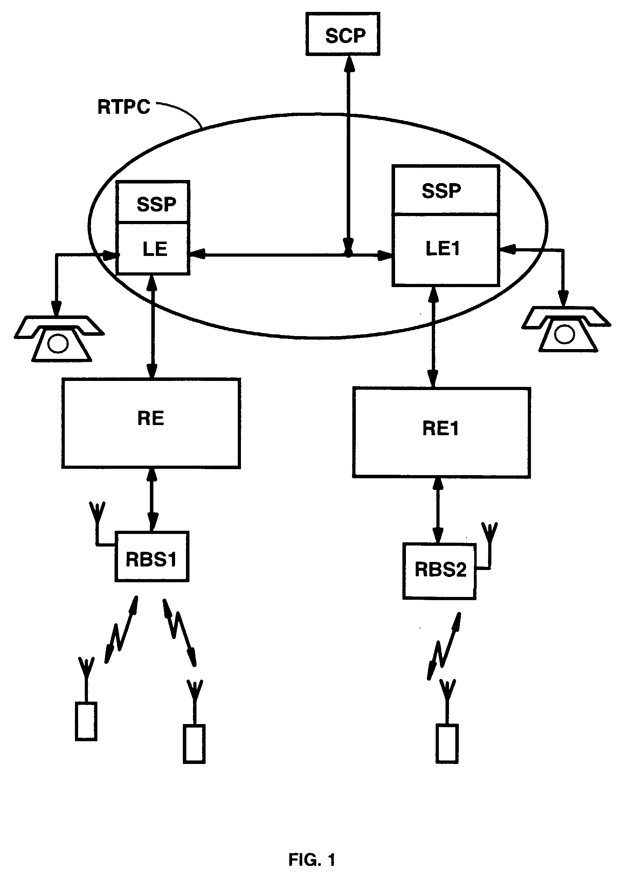

Figure 1 shows a CTM mobile communication system according to the tate of the art, being possible to be divide it into two subsystems, such as radio access and fixed network.

Radio access includes a plurality of wireless terminals connected via radio to one or several radio base stations RBS1, RBS2 being connected via an interface to a base station controller RE.

The base station controller RE acts as an intermediary between the radio base stations RBS1, RBS2 and the fixed network, since the base station controller RE is connected by means of a primary or basic access of an integrated service digital network RDSI to a local exchange LE of a switched public telephone network RTPC; using an improved signaling protocol DSS1+. One or several base station controllers RE, RE1 can be connected to the same local exchange LE.

In order to support the CTM network system, the fixed network comprises some functional blocks of an intelligent network RI, such as a service control point SCP containing logic programs of the service used to provide CTM services and data related to the subscribers, that is, the control logic includes service control functions and the service data function.

There are two types of databases; in one of them the location identity of each subscriber is maintained and in the other the information related to the visiting subscribers is maintained. One of the logic programs that the SCP control point contains, manages and controls the information related to the mobile subscribers in the databases, being continuously updated according to the information coming from the base station controllers RE, RE1.

The CTM service requests are detected by a service switching point SSP, a functional block of the intelligent network, which is integrated in the local exchange LE. Therefore, the local exchange LE provides the switching functionality and supports the mobility management signaling, moreover performing the conversion of the mobility control signaling from the improved protocol DSS1+ to the improved intelligent network application protocol INAP+, transported by the digital network RDSI. Said improved application protocol INAP+ is used to communicate the different functional blocks of an intelligent network RI.

The service switching point SSP detects the CTM service requests, when the call arrives at the local exchange LE, then initiating a dialog with the service control point SCP to route and complete the call.

Accordingly, the service control point SCP instructs the service switching point SSP step by step about how to route the incoming call.

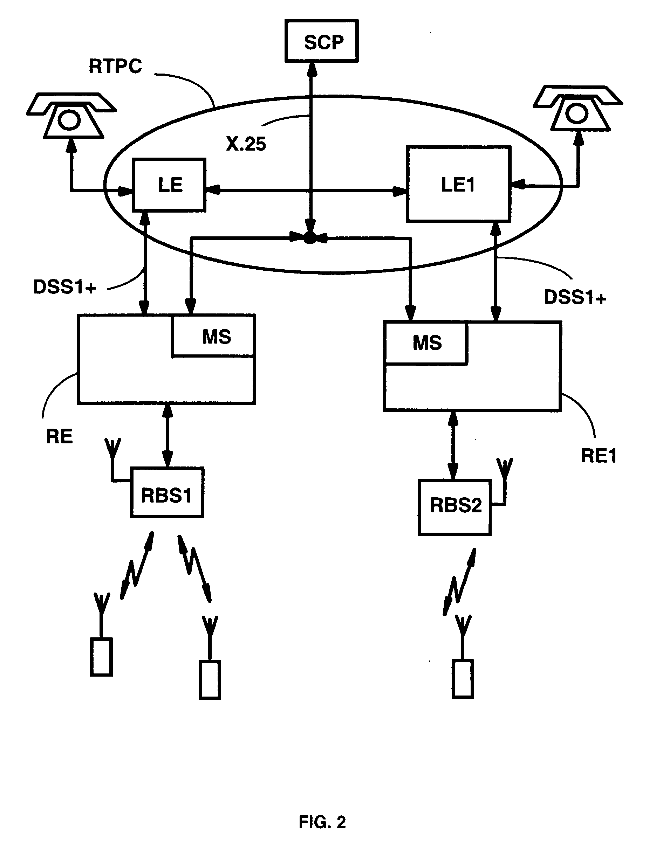

Figure 2 shows a simplified diagram of a system for the mobility of CTM wireless telephones, according to the invention, where the base station controller RE comprises switching means MS that operate as a service switching point SSP, carrying out the function of a gateway.

When any subscriber initiates a call to another subscriber to the CTM network system, said call is sent by the local exchange LE to the base station controller RE that is nearest to the calling subscriber if this is done by a subscriber of a telephone network RTPC; if it is done by another subscriber to the CTM network system, the call arrives at the'radio exchange RE that gives coverage to said mobile subscriber.

Once the call arrives at the base station controller RE, the switching means MS initiate the dialog with the service control point SCP to route and complete the call.

The base station controller RE sends the mobility control signaling to the service switching point SCP by means of a direct signaling interface and a mobility control protocol, that is, it is transported by means of an X.25 interface and the X.25 interface protocol according to the X.25 recommendation of the International Union of Telecommunications, Telecommunications Sector.

With the CTM network system of the invention, the local exchanges LE of the existing telephone network RTPC do not have to be modified, because the mobility control functions have been incorporated as own functions of the base station controller RE, and, besides, the local exchange LE does not perform any conversion of the mobility control signaling.

The switching means MS detect the CTM service requests when the call reaches the base station controller RE, then initiating a dialog with the service control point SCP, so that once the databases have been consulted through the service control point SCP, it returns the instruction related to call routing to the switching means MS to route and complete the call.

If the called subscriber is located in a second base station controller RE1, the requesting base station controller RE returns the incoming call to the telephone network RTPC according to the information received from the control point SCP, the call being routed to a directory number of the second base station controller RE1, where the service control point has located the called mobile subscriber. Said directory number is indicated to the requesting base station controller RE by the control point SCP.

The directory number indicated belongs to a block of hidden directory numbers, not assigned to physical subscribers, and which each base station controller RE, RE1 has reserved for this function, being activated according to the requirements of the telephone service.

As a result, once it has been established that the mobile subscriber who is called belongs to the second base station controller RE1, the switching point SCP requests a free directory number, the returned call being routed to the telephone network RTPC to said directory number. Once the call is in the second controller RE1, it completes the call.

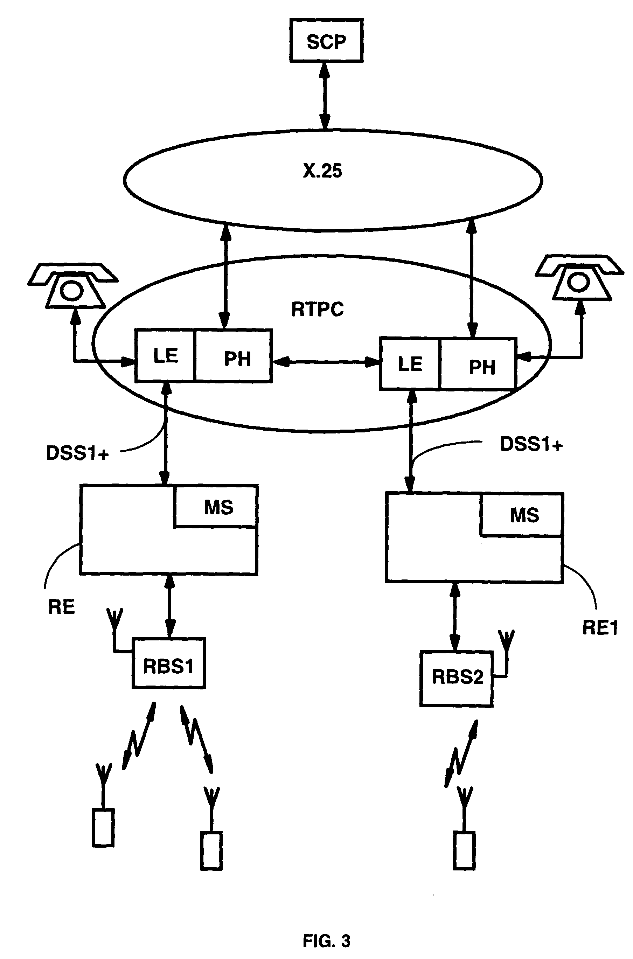

Figure 3 shows another embodiment of the CTM network system, where the interface between the base station controller RE and the local exchange LE is the primary access of the integrated service digital network RDSI, using an X.25 protocol, according to the X.31 recommendation of the International Union of Telecommunications.

In the local exchange LE, a package handler PH extracts the messages and sends them by means of the X.25 interface towards the control point SCP. In this way, the local exchange LE passes the mobility control protocol transparently, not executing any conversion of communication protocols.

## Claims

1. **SYSTEM AND METHOD FOR ROUTING INCOMING CALLS FOR A MOBILE COMMUNICATION SYSTEM** comprising wireless terminals, at least one radio base station (RBS1), at least one base station controller (RE) being connected through a primary access of an integrated service digital network (RDSI) to an exchange (LE) of a switched public telephone network (RTPC), furthermore comprising at least one service control point (SCP), which includes databases related to the wireless terminals associated to the base station controller (RE) and logic control programs of the mobility service, **characterized** in that the base station controller (RE) sends the mobility control signaling to the service control point (SCP) by means of a direct logic signaling channel and a mobility control protocol.

2. **SYSTEM FOR ROUTING INCOMING CALLS** according to claim 1, **characterized** in that the base station controller (RE) moreover comprises switching means (MS) including the gateway function of a service switching point (SSP), so that when the incoming call arrives, the switching means (MS) request instructions from the service control point (SCP) to route the incoming call.

3. **SYSTEM FOR ROUTING INCOMING CALLS** according to claim 1, **characterized** in that the direct logic signaling channel and the mobility control protocol are transported by means of an X.25 interface and the X.25 interface protocol according to the X.25 recommendation of the International Union of Telecommunications, Telecommunications Sector.

4. **SYSTEM FOR ROUTING INCOMING CALLS** according to claims 1 and 3, **characterized** in that the direct logic channel is transported through the primary access of the integrated service digital network (RDSI) by means of the package transport services X.25, according to X.31 recommendation of the International Union of Telecommunications, Telecommunications Sector, in a way that the messages are extracted from the logic channel by means of a packet handler (PH) of the exchange (LE) and sent to the service control point (SCP) by means of the X.25 interface.

5. **METHOD FOR ROUTING INCOMING CALLS TO A MOBILE COMMUNICATION SYSTEM** according to claim 2, **characterized** in that the base station controller (RE) furthermore receives and makes the incoming call progress according to the routing data received from the service control point (SCP).

6. **METHOD FOR ROUTING INCOMING CALLS** according to claim 5, **characterized** in that the base station controller (RE) furthermore has the possibility of returning the incoming call to the switched public telephone network (RTPC), according to the routing data received from the service control point (SCP).

7. **METHOD FOR ROUTING INCOMING CALLS** according to claim 6, **characterized** in that the service control point (SCP) indicates the base station controller (RE) a directory number to which the incoming call returned to the switched public telephone network (RTPC) is routed.

8. **METHOD FOR ROUTING INCOMING CALLS** according to claim 7, **characterized** in that the indicated directory number belongs to a block of hidden directory numbers of a second base station controller (RE1), where the service control point has recorded the mobile subscriber called.

9. **METHOD FOR ROUTING INCOMING CALLS** according to claim 8, **characterized** in that the indicated directory number is activated by the second base station controller (RE1) on request of the service control point (SCP).

10. **METHOD FOR ROUTING INCOMING CALLS** according to claim 9, **characterized** in that each base station controller (RE, RE1) reserves a block of hidden directory numbers.
